(19) Europäisches Patentamt

European Patent Office

Office européen des brevets

(11) **EP 2 684 604 A1**

(12) **EUROPEAN PATENT APPLICATION**
published in accordance with Art. 153(4) EPC

(43) Date of publication:
**15.01.2014 Bulletin 2014/03**

(51) Int Cl.:
*B01J 29/85* (2006.01)    *B01D 53/94* (2006.01)
*B01J 37/02* (2006.01)    *C01B 37/04* (2006.01)
*F01N 3/10* (2006.01)    *F01N 3/28* (2006.01)

(21) Application number: **12754467.4**

(22) Date of filing: **31.01.2012**

(86) International application number:
**PCT/JP2012/052069**

(87) International publication number:
**WO 2012/120942 (13.09.2012 Gazette 2012/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.03.2011 JP 2011050321**

(71) Applicant: **MITSUBISHI PLASTICS, INC.**
**Chiyoda-ku,**
**Tokyo 100-8252 (JP)**

(72) Inventors:
• **MATSUO, Takeshi**
**Yokohama-shi**
**Kanagawa 227-8502 (JP)**

• **NISHIOKA, Daisuke**
**Yokohama-shi**
**Kanagawa 227-8502 (JP)**
• **TAKEWAKI, Takahiko**
**Yokohama-shi**
**Kanagawa 227-8502 (JP)**
• **CHEN, Haijun**
**Yokohama-shi**
**Kanagawa 227-8502 (JP)**
• **OSHIMA, Kazunori**
**Yokohama-shi**
**Kanagawa 227-8502 (JP)**

(74) Representative: **HOFFMANN EITLE**
**Patent- und Rechtsanwälte**
**Arabellastrasse 4**
**81925 München (DE)**

(54) **CATALYST, ELEMENT FOR NITROGEN OXIDE REMOVAL, AND SYSTEM FOR NITROGEN OXIDE REMOVAL**

(57)    To provide an exhaust gas purification catalyst which has high nitrogen oxide removal performance at both an exhaust gas temperature of 200°C or lower and an exhaust gas temperature of 500°C or higher and high durability to the repetitive adsorption and desorption of water vapor. A catalyst contains zeolite having a framework structure containing at least aluminum atoms, phosphorus atoms, and silicon atoms and metal supported on the zeolite. The integrated intensity area of a signal intensity of -130 ppm to -92.5 ppm is 41% or more of the integrated intensity area of a signal intensity of -130 ppm to -50 ppm in the case of measuring a solid-state $^{29}Si$-DD/MAS-NMR spectrum after water adsorption.

Fig.1

[EXAMPLE 1]

AFTER DRYING

AFTER WATER ADSORPTION

chemical shift/ppm

EP 2 684 604 A1

**Description**

Field of Invention

The present invention relates to catalysts particularly suitable for removing nitrogen oxide and particularly relates to a zeolite-containing catalyst (hereinafter simply referred to as "zeolite catalyst" in some cases) that can efficiently decompose and remove nitrogen oxide contained in exhaust gas emitted from internal combustion engines such as diesel engines; a device, including the zeolite catalyst, for removing nitrogen oxide; and a system including the same. The term "removing nitrogen oxide" as used herein means that nitrogen oxide is reduced into nitrogen and oxygen.

Background of Invention

In recent years, in the treatment of car exhaust gases, particularly diesel exhaust gases having difficulty in removing nitrogen oxide, metal-supported zeolite catalysts have been proposed as selective catalytic reduction (SCR) catalysts for nitrogen oxide or the like.
For example, Patent Literature 1 proposes an SCR catalyst in which metal in a specific state is supported on silicoaluminophosphate zeolite having specific properties.
Furthermore, Patent Literature 2 proposes an SCR catalyst in which copper is supported on SAPO-34, synthesized using a specific template, by an ion exchange process.

List of Literature

Patent Literature

   Literature 1: WO 2010/084930
   Literature 2: WO 2009/099937

Object and Summary of Invention

A catalyst described in Patent Literature 1 exhibits high NOx decomposition activity at an exhaust gas temperature of 200°C or lower and has long-term durability under conditions where the adsorption and desorption of water are repeated in the actual use of this catalyst. However, there is a problem in that the NOx decomposition activity thereof is insufficient at a high temperature of 500°C or higher.
On the other hand, a catalyst described in Patent Literature 2 has high NOx decomposition activity at a high temperature of 500°C or higher. However, the NOx decomposition activity at an exhaust gas temperature of 200°C or lower is insufficient and there is a disadvantage that the durability to the repetitive adsorption and  desorption of water vapor is extremely low.
The present invention has an object to provide a catalyst which has high nitrogen oxide removal performance at both an exhaust gas temperature of 200°C or lower and an exhaust gas temperature of 500°C or higher and high durability to the repetitive adsorption and desorption of water vapor and which is useful as an exhaust gas purification catalyst.
As a result of intensive investigations, the inventors have found that a catalyst, containing silicoaluminophosphate zeolite and metal supported thereon, for removing nitrogen oxide, has more excellent NOx gas removal performance at both an exhaust gas temperature of 200°C or lower and an exhaust gas temperature of 500°C or higher as compared to conventional catalysts for removing nitrogen oxide and exhibits high durability to the repetitive adsorption and desorption of water vapor when silicon in the zeolite is in a specific state, thereby completing the present invention.
That is, the scope of the present invention is as described below.

   [1] A catalyst contains zeolite having a framework structure containing at least aluminum atoms, phosphorus atoms, and silicon atoms and metal supported on the zeolite. The integrated intensity area of a signal intensity of -130 ppm to -92.5 ppm is 41% or more of the integrated intensity area of a signal intensity of -130 ppm to -50 ppm in the case of measuring a solid-state $^{29}$Si-DD/MAS-NMR spectrum after water adsorption.
   [2] A catalyst contains zeolite having a framework structure containing at least aluminum atoms, phosphorus atoms, and silicon atoms and metal supported on the zeolite. The integrated intensity area of a signal intensity of -130 ppm to -100 ppm is 17% or more of the integrated intensity area of a signal intensity of -130 ppm to -50 ppm in the case of measuring a solid-state $^{29}$Si-DD/MAS-NMR spectrum after water adsorption.

[3] A catalyst contains zeolite having a framework structure containing at least aluminum atoms, phosphorus atoms, and silicon atoms and metal supported on the zeolite. The difference obtained by subtracting the position of the top of a peak in a range from -87.5 ppm to -97.5 ppm in a solid-state $^{29}$Si-DD/MAS-NMR spectrum after drying from the position of the top of a peak in a range from -87.5 ppm to - 97.5 ppm in a solid-state $^{29}$Si-DD/MAS-NMR spectrum after water adsorption is 4.5 ppm or less.

[4] In the catalyst specified in any one of [1] to [3], the structure of the zeolite is CHA in the code assigned by IZA.

[5] The catalyst specified in any one of [1] to [4] is for removing nitrogen oxide.

[6] In the catalyst specified in any one of [1] to [5], x is 0.1 or more and 0.3 or less, y is 0.2 or more and 0.6 or less, and z is 0.2 or more and 0.6 or less, where x is assigned to the abundance of the silicon atoms with respect to the total of the silicon atoms, aluminum atoms, and phosphorus atoms contained in the framework structure of the zeolite, y is assigned to the abundance of the aluminum atoms with respect to the total of the silicon atoms, aluminum atoms, and phosphorus atoms contained in the framework structure of the zeolite, and z is assigned to the abundance of the phosphorus atoms with respect to the total of the silicon atoms, aluminum atoms, and phosphorus atoms contained in the framework structure of the zeolite.

[7] In the catalyst specified in any one of [1] to [6], the zeolite is produced in such a way that a silicon atom source, an aluminum atom source, a phosphorus atom source, and templates are mixed and are then subjected to hydrothermal synthesis and the templates are one or more compounds selected from each of the following two groups:

> (1) heteroalicyclic compounds containing a hetero atom such as a nitrogen atom and
> (2) alkylamines.

[9] A device for removing nitrogen oxide, obtained by applying the catalyst specified in any one of [1] to [8] to a honeycombed form.

[10] A device for removing nitrogen oxide, obtained by subjecting a mixture containing the catalyst specified in any one of [1] to [8] to forming.

[11] A nitrogen oxide removal system includes the device for removing nitrogen oxide specified in [9] or [10].

[12] A method for producing a catalyst includes producing zeolite having a framework structure containing at least aluminum atoms and phosphorus atoms in such a way that a silicon atom source, an aluminum atom source, a phosphorus atom source, and templates are mixed and are then subjected to hydrothermal synthesis and supporting metal on the zeolite. The templates used are one or more compounds selected from each of two groups, (1) heteroalicyclic compounds containing a hetero atom such as a nitrogen atom and (2) alkylamines, and the mixing ratio of the silicon atom source, the aluminum atom source, and the phosphorus atom source is set such that the value of $SiO_2/Al_2O_3$ is 0.5 or more and the value of $P_2O_5/Al_2O_3$ is 1.1 or less in terms of the molar ratio of oxides of the silicon atom source, the aluminum atom source, and the phosphorus atom source.

[13] The method for producing the catalyst specified in [12] includes preparing a mixed slurry by mixing a metal source of the supported metal and the zeolite with a dispersion medium and calcining powder obtained by removing the dispersion medium from the mixed slurry.

[14] In the method for producing the catalyst specified in [13], the metal source is a salt of copper and/or iron.

[15] In the method for producing the catalyst specified in [13] or [14], the time taken to remove the dispersion medium from the mixed slurry is 60 minutes or less.

[16] In the method for producing the catalyst specified in any one of [13] to [15], the dispersion medium is removed in such a way that the mixed slurry is uniformly sprayed and is then dried by contacting the mixed slurry with hot air. Advantageous Effects of Invention

According to the present invention, the following catalyst, device, and system are provided: a catalyst which has excellent NOx gas removal performance at both an exhaust gas temperature of 200°C or lower and an exhaust gas temperature of 500°C or higher and which exhibits high durability to the repetitive adsorption and desorption of water vapor; a device, including the catalyst and having excellent nitrogen oxide removal performance and retentivity thereof, for removing nitrogen oxide; and a nitrogen oxide removal system including the catalyst and having excellent nitrogen oxide removal performance and retentivity thereof. Brief Description of Drawings

Fig. 1 is a chart illustrating results obtained by measuring an SCR catalyst produced in Example 1 by solid-state $^{29}$Si-DD/MAS-NMR after water adsorption and after drying.

Fig. 2 is a chart illustrating results obtained by measuring an SCR catalyst produced in Example 2 by solid-state $^{29}$Si-DD/MAS-NMR after water adsorption and after drying.

Fig. 3 is a chart illustrating results obtained by measuring an SCR catalyst produced in Comparative Example 1 by solid-state $^{29}$Si-DD/MAS-NMR after water adsorption and after drying.

Fig. 4 is a chart illustrating results obtained by measuring an SCR catalyst produced in Comparative Example 2 by solid-state $^{29}$Si-DD/MAS-NMR after water adsorption and after drying.

Fig. 5 is a chart illustrating results obtained by measuring an SCR catalyst produced in Comparative Example 3 by solid-state $^{29}$Si -DD/MAS-NMR after water adsorption and after drying.

Fig. 6 is a schematic view illustrating the configuration of a repetitive water vapor adsorption-desorption testing apparatus for catalysts used in examples. Description of Embodiments

Embodiments of the present invention are described below in detail. Description below is an example (a typical example) of an embodiment of the present invention. The present invention is not limited to contents thereof.

[Catalyst]

A catalyst according to the present invention contains zeolite having a framework structure containing at least aluminum atoms, phosphorus atoms, and silicon atoms and metal supported on the zeolite and satisfies one or more of the followings (i) to (iii):

(i) the integrated intensity area of a signal intensity of -130 ppm to -92.5 ppm is 41% or more of the integrated intensity area of a signal intensity of -130 ppm to -50 ppm in the case of measuring a solid-state $^{29}$Si-DD/MAS-NMR spectrum after water adsorption (hereinafter referred to as "Condition (i)" in some cases),

(ii) the integrated intensity area of a signal intensity of -130 ppm to -100 ppm is 17% or more of the integrated intensity area of a signal intensity of -130 ppm to -50 ppm in the case of measuring a solid-state $^{29}$Si-DD/MAS-NMR spectrum after water adsorption (hereinafter referred to as "Condition (ii)" in some cases), and

(iii) the difference obtained by subtracting the position of the top of a peak in a range from -87.5 ppm to -97.5 ppm in a solid-state $^{29}$Si-DD/MAS-NMR spectrum after drying from the position of the top of a peak in a range from -87.5 ppm to -97.5 ppm in a solid-state $^{29}$Si-DD/MAS-NMR spectrum after water adsorption is 4.5 ppm or less (hereinafter referred to as "Condition (iii)" in some cases).

<Zeolite>

The zeolite used in the present invention is zeolite (hereinafter simply referred to as "zeolite" in some cases) having a framework structure containing at least silicon atoms, aluminum atoms, and phosphorus atoms and is referred to as silicoaluminophosphate (SAPO).

Ratio of the aluminum atoms, phosphorus atoms, and silicon atoms contained in the framework structure of the zeolite used in the present invention preferably satisfies the following inequalities (I), (II), and (III):

$$0.1 \leq x \leq 0.3 \qquad\qquad (I)$$

$$0.2 \leq y \leq 0.6 \qquad\qquad (II)$$

$$0.2 \leq z \leq 0.6 \qquad\qquad (III)$$

where x represents the molar ratio of the silicon atoms to the total of the silicon atoms, aluminum atoms, and phosphorus atoms in the framework structure; y represents the molar ratio of the aluminum atoms to the total of the silicon atoms, aluminum atoms, and phosphorus atoms in the framework structure; and z represents the molar ratio of the phosphorus atoms to the total of the silicon atoms, aluminum atoms, and phosphorus atoms in the framework structure.

The value of x is usually 0.1 or more, preferably 0.12 or more, and more preferably 0.14 or more. The value of x is usually 0.3 or less, preferably 0.2 or less, and more preferably 0.18 or less. When the value of x is less than the above lower limit, the nitrogen oxide removal performance of a catalyst, prepared by supporting metal, for removing nitrogen oxide is insufficient at an exhaust gas temperature of 500°C or higher in some cases. When the value of x is more than the above upper limit, the contamination of impurities is likely to occur during synthesis.

In addition, y is usually 0.2 or more, preferably 0.35 or more, and more preferably 0.40 or more. Furthermore, y is usually 0.6 or less and preferably 0.55 or less. When the value of y is less than the above lower limit or is more than the above upper limit, the contamination of impurities is likely to occur during synthesis.

In addition, z is usually 0.2 or more, preferably 0.25 or more, and more preferably 0.30 or more. Furthermore, z is usually 0.6 or less, preferably 0.50 or less, and more preferably 0.40 or less. When the value of z is less than the above lower limit, the contamination of impurities is likely to occur during synthesis. When the value of z is more than the above upper limit, the nitrogen oxide removal performance of a catalyst, prepared by supporting metal, for removing nitrogen oxide is insufficient at an exhaust gas temperature of 500°C or higher in some cases.

The framework structure of the zeolite used in the present invention may further contain another atom other than the aluminum, phosphorus, and silicon atoms. As the atom that may be contained therein, one or more than two of the following atoms are cited: atoms such as lithium, magnesium, titanium, zirconium, vanadium, chromium, manganese, iron, cobalt, nickel, palladium, copper, zinc, gallium, germanium, arsenic, tin, calcium, and boron. An iron atom, a copper atom, and a gallium atom are preferably cited.

The content of these atoms in the framework structure of the zeolite is preferably 0.3 or less and more preferably 0.1 or less in terms of the molar ratio to the total of the silicon, aluminum, and phosphorus atoms.

The proportion of each atom in the framework structure of the zeolite is determined by element analysis. In the present invention, element analysis is as follows: a sample is dissolved in a hot aqueous solution of hydrochloric acid and is then determined by inductively coupled plasma (ICP) emission spectrometry.

<Framework structure>

Zeolites are usually crystalline and have a regular network structure in which methane-type $SiO_4$ tetrahedra, $AlO_4$ tetrahedra, or $PO_4$ tetrahedra (these are hereinafter collectively referred to as "$TO_4$" and a contained atom other than oxygen atoms is hereinafter referred to as the "T atom") share an oxygen atom located at each vertex and are connected to each other. Atoms other than Al, P, and Si are known as T atoms. A ring consisting of eight $TO_4$ tetrahedra connected to each other is one of basic units of a network structure and is referred to as an eight-membered ring. Likewise, a six-membered ring, a ten-membered ring, and the like are basic units of a zeolite structure.

The structure of the zeolite used in the present invention is determined by X-ray diffractometry (X-ray diffraction, hereinafter referred to as XRD).

The structure of the zeolite used in the present invention is preferably any one of AEI, AFR, AFS, AFT, AFX, AFY, AHT, CHA, DFO, ERI, FAU, GIS, LEV, LTA, and VFI and more preferably AEI, AFX, GIS, CHA, VFI, AFS, LTA, FAU, and AFY as expressed in the code assigned by the International Zeolite Association (IZA). Zeolite having a CHA structure is most preferred because fuel-derived hydrocarbons are unlikely to be adsorbed thereon.

The framework density of zeolites used in the present invention is not particularly limited. The framework density thereof is usually 13.0 $T/nm^3$ or more, preferably 13.5 $T/nm^3$ or more, and more preferably 14.0 $T/nm^3$ or more. The framework density thereof is usually 20.0 $T/nm^3$ or less, preferably 19.0 $T/nm^3$ or less, and more preferably 17.5 $T/nm^3$ or less. The framework density ($T/nm^3$) refers to the number of T atoms (atoms (T atoms), other than oxygen atoms, constituting the framework structure of zeolite) present in the unit volume $nm^3$ of zeolite and depends on the structure of zeolite.

When the framework density of the zeolite is less than the above lower limit, the structure is unstable or the durability is low in some cases. However, when the framework density is more than the above upper limit, the amount of adsorption or the catalytic activity is low or the zeolite is unsuitable for use in catalysts in some cases.

<Particle size>

The size of particles of the zeolite used in the present invention is not particularly limited. The particle size is usually 1 $\mu$m or more, preferably 2 $\mu$m or more, and more preferably 3 $\mu$m or more. The particle size is usually 15 $\mu$m or less and preferably 10 $\mu$m or less.

The particle size of the zeolite used in the present invention refers to the value obtained by measuring the size of the particles after the removal of a template in the production of the zeolite as described below. The particle size thereof also refers to the average size of arbitrary ten to 30 primary particles of the zeolite by electron microscope.

{Method for producing zeolite}

The zeolite used in the present invention is a known compound and can be produced by a method usually used.

A method for producing the zeolite used in the present invention is not particularly limited. The zeolite can be produced by a method described in, for example, Japanese Unexamined Patent Application Publication No. 2003-183020, WO 2010/084930, Japanese Examined Patent Application Publication No. 4-37007, Japanese Examined Patent Application Publication No. 5-21844, Japanese Examined Patent Application Publication No. 5-51533, U.S. Pat. No. 4,440,871, or the like.

The zeolite used in the present invention is usually obtained in such a way that an aluminum atom source, a phosphorus atom source, a silicon atom source, and templates used as required are mixed and are then subjected to hydrothermal synthesis. In the case of mixing the templates, an operation of removing the templates is usually performed after hydrothermal synthesis.

<Aluminum atom source>

The aluminum atom source for the zeolite used in the present invention is not particularly limited and usually includes pseudo-boehmite, aluminum alkoxides such as aluminum isopropoxide and aluminum triethoxide, aluminum hydroxide, alumina sol, sodium aluminate, and the like. These may be used alone or in combination. The aluminum atom source is preferably pseudo-boehmite because pseudo-boehmite is easy to handle and has high reactivity.

<Phosphorus atom source>

The phosphorus atom source for the zeolite used in the present invention is usually phosphoric acid and may be aluminum phosphate. Phosphorus atom sources may be used alone or in combination.

<Silicon atom source>

The silicon atom source for the zeolite used in the present invention is not particularly limited and usually includes fumed silica, silica sol, colloidal silica, water glass, ethyl silicate, methyl silicate, and the like. These may be used alone or in combination. Fumed silica has high purity and high reactivity and therefore is preferred.

<Templates>

The templates, which are used to produce the zeolite used in the present invention, may be various templates used in known methods and are preferably one or more compounds selected from each of the following two groups: (1) heteroalicyclic compounds containing a hetero atom such as a nitrogen atom and (2) alkylamines.

(1) Heteroalicyclic compounds containing hetero atom such as nitrogen atom

A heterocyclic group of each heteroalicyclic compound containing a hetero atom such as a nitrogen atom is usually a five- to seven-membered ring and is preferably a six-membered ring. The number of hetero atoms contained in the heterocyclic group is usually three or less and preferably two or less. A hetero atom other than a nitrogen atom is arbitrary. An oxygen atom is preferably contained in addition to such a nitrogen atom. The position of a hetero atom is not particularly limited. One containing no neighboring hetero atoms is preferred.

The molecular weight of the heteroalicyclic compounds containing a hetero atom such as a nitrogen atom is usually 250 or less, preferably 200 or less, and more preferably 150  or less. The molecular weight thereof is usually 30 or more, preferably 40 or more, and more preferably 50 or more.

The heteroalicyclic compounds containing a hetero atom such as a nitrogen atom include morpholine, N-methylmorpholine, piperidine, piperazine, N,N'-dimethyl piperazine, 1,4-diazabicyclo(2,2,2)octane, N-methylpiperidine, 3-methylpiperidine, quinuclidine, pyrrolidine, N-methylpyrrolidone, hexamethylene imine, and the like. These may be used alone or in combination. Among these, morpholine, hexamethyleneimine, and piperidine are preferred and morpholine is particularly preferred.

(2) Alkylamines

Each alkylamine contain alkyl groups which are usually linear alkyl groups. The number of alkyl groups contained in a molecule of the amine is not particularly limited and is preferably three.

The alkyl groups of the alkylamine may partly have a substituent such as a hydroxyl group.

The number of carbon atoms in each alkyl group of the alkylamine is preferably four or less. The sum of carbon atoms in all alkyl groups in one molecule is preferably ten or less.

The molecular weight of the alkylamine is usually 250  or less, preferably 200 or less, and more preferably 150 or less.

The alkylamines include di-n-propylamine, tri-n-propylamine, tri-isopropylamine, triethylamine, triethanolamine, N,N-diethylethanolamine, N,N-dimethylethanolamine, N-methyldiethanolamine, N-methylethanolamine, di-n-butylamine, neopentylamine, di-n-pentylamine, isopropylamine, t-butylamine, ethylenediamine, di-isopropyl-ethylamine, N-methyl-n-butylamine, and the like. These may be used alone or in combination. Among these, din-propylamine, tri-n-propylamine, tri-isopropylamine, triethylamine, di-n-butylamine, isopropylamine, t-butylamine, ethylenediamine, di-isopropyl-ethylamine, and N-methyl-n-butylamine are preferred and triethylamine is particularly preferred.

A preferable combination of the templates of above (1) and (2) is a combination including morpholine and triethylamine.

The mixing ratio of the templates needs to be selected depending on conditions.

In the case of using two types of templates in combination, the molar ratio of the mixed two-type templates is usually 1:20 to 20:1, preferably 1:10 to 10:1, and more preferably 1:5 to 5:1.

In the case of using three types of templates in combination, the molar ratio of a third template to the sum of the mixed two-type templates of above (1) and (2) is usually 1:20 to 20:1, preferably 1:10 to 10:1, and more preferably 1:5 to 5:1.

The mixing ratio of two or more types of templates is not particularly limited and may be selected depending on conditions. In the case of using, for example, morpholine and triethylamine, the molar ratio of morpholine to triethylamine is usually 0.05 or more, preferably 0.1 or more, and more preferably 0.2 or more. The molar ratio thereof is usually 20 or less, preferably 10 or less, and more preferably 5 or less.

The templates may include another template other than above (1) and (2). The proportion of the other template in the total of the templates is usually 20% or less and preferably 10% or less on a molar basis.

The use of the templates to produce the zeolite used in the present invention enables the content of Si in the obtained zeolite to be controlled and allows the content of Si and the state of Si present therein to be suitable for catalysts for removing nitrogen oxide. The reason for this is unclear but is probably as described below.

In the case of using (1) a heteroalicyclic compound containing a hetero atom such as a nitrogen atom, for example, morpholine as a template to synthesize, for example, a SAPO having a CHA structure, the SAPO can be relatively readily synthesized so as to have a large Si content. However, if an attempt is made to synthesize a SAPO having a small Si content, crystallization is difficult because there are many dense components and amorphous components. On the other hand, in the case of using (2) an alkylamine, for example, triethylamine as a template, a SAPO having a CHA structure can be synthesized under limited conditions and SAPOs having various structures are usually likely to be, however, present. However, in other words, no dense components or amorphous components are obtained but a crystalline structure is likely to be obtained. That is, the template of each of above (1) and (2) has a feature for inducing a CHA structure and a feature for promoting the crystallization of a SAPO. Combining these features creates a synergistic effect and therefore an effect that cannot be achieved using the template of (1) or (2) alone can be probably obtained.

<Synthesis of zeolite by hydrothermal synthesis>

In order to produce the zeolite used in the present invention, aqueous gel is prepared in such a way that the silicon atom source, the aluminum atom source, the phosphorus atom source, the templates, and water are mixed together. The order of mixing is not limited and may be appropriately selected. In usual, water is mixed with the phosphorus atom source and the aluminum atom source and these materials are mixed with the silicon atom source and the templates.

The order of mixing the templates, which are one or more selected from each of the two groups, (1) and (2), is not particularly limited. After being prepared, the templates may be mixed with the other materials or each of the templates may be mixed with the other materials.

The composition of the aqueous gel is preferably as described below.

That is, in the case of expressing the molar ratio of the silicon atom source, the aluminum atom source, and the phosphorus atom source in terms of corresponding oxides, the value of $SiO_2/AlO_2O_3$ is usually more than 0.3, preferably 0.4 or more, more preferably 0.5 or more, and further more preferably 0.6 or more. The value thereof is usually 1.0 or less and preferably 0.8 or less. On the same basis as above, the $P_2O_5/Al_2O_3$ ratio is usually 0.5 or more, preferably 0.6 or more, and more preferably 0.7 or more. The $P_2O_5/Al_2O_3$ ratio is usually 1.3 or less, preferably 1.2 or less, more preferably 1.1 or less, further more preferably 0.9 or less, and particularly possibly 0.75 or less.

The composition of zeolites obtained by hydrothermal synthesis correlates with the composition of aqueous gels. Thus, in order to obtain zeolite with a desired composition, the composition of the aqueous gel may be appropriately set within the above range.

The total amount of the templates is usually 0.2 or more, preferably 0.5 or more, and more preferably 1 or more in terms of the molar ratio of the templates to $Al_2O_3$ in the case of expressing the aluminum atom source in the aqueous gel in terms of an oxide. The total amount thereof is usually 4 or less, preferably 3 or less, and more preferably 2.5 or less. When the amount of the templates used is not less than the above lower limit, the amount of the templates is sufficient. When the amount of the templates used is not more than the above upper limit, the concentration of alkali can be suppressed. Thus, when the amount of the templates used is within the above range, crystallization can be performed well.

In the case of expressing the aluminum atom source in terms of an oxide, the proportion of water in the aqueous gel is usually 3 or more, preferably 5 or more, and more preferably 10 or more in terms of the molar ratio of water to $Al_2O_3$ in view of the ease of synthesis and high productivity. The proportion thereof is usually 200 or less, preferably 150 or less, and more preferably 120 or less.

The pH of the aqueous gel is usually 5 or more, preferably 6 or more, and more preferably 6.5 or more. The pH thereof is usually 10 or less, preferably 9 or less, and more preferably 8.5 or less.

The aqueous gel may contain a component other than the above components. Examples of such a component include hydroxides of alkali metals and alkaline-earth metals, salts thereof, and hydrophilic organic solvents such as alcohols. The content of the other component in the aqueous gel, that is, the content of a hydroxide or salt of an alkali or alkaline-earth metal is usually 0.2 or less and preferably 0.1 or less in terms of the molar ratio thereof to $Al_2O_3$ in the case of expressing the aluminum atom source in terms of an oxide. The content of a hydrophilic organic solvent such as alcohol is usually 0.5 or less and preferably 0.3 or less in terms of the molar ratio thereof to water in the aqueous gel.

Hydrothermal synthesis is performed in such a way that the aqueous gel is put in a pressure-tight vessel and is held at a predetermined temperature in a stirred or static state under autogenous pressure or gas pressure that does not inhibit crystallization. The temperature of hydrothermal synthesis is usually 100°C or higher, preferably 120°C or higher, and more preferably 150°C or higher. The temperature thereof is usually 300°C or lower, preferably 250°C or lower, and more preferably 220°C or lower. In the course of heating to the maximum attained temperature, which is the highest temperature within this temperature range, it is preferably left in a temperature range from 80°C to 120°C for one hour or more and more preferably two hours or more.

When the heating time in this temperature range is less than one hour, the durability of zeolite obtained by calcining obtained template-containing zeolite is insufficient in some cases. In view of the durability of obtained zeolite, it is preferably left in a temperature range from 80°C to 120°C for one hour or more.

On the other hand, the upper limit of the heating time in this temperature range is not particularly limited. When the upper limit thereof is excessively long, inconvenience in production efficiency is caused in some cases. Therefore, the upper limit thereof is usually 50 hours or less and preferably 24 hours or less in view of production efficiency.

A heating method between the temperature regions is not particularly limited. For example, the following methods can be used: various methods such as a monotonic heating method, a stepwise varying method, a vibrating or fluctuating method, and combinations of these methods. In usual, the following method is preferably used because of the ease of control: a method in which monotonic heating is performed in such a way that the heating rate is maintained at a certain value or less.

It is preferably held at a temperature close to the maximum attained temperature for a predetermined time during hydrothermal synthesis. The term "temperature close to the maximum attained temperature" refers to a temperature ranging from a temperature 5°C lower than the temperature to the maximum attained temperature. The time for which it is held at the maximum attained temperature affects the ease of synthesizing desired zeolite. The time therefor is usually 0.5 hours or more, preferably three hours or more, and more preferably five hours or more. The time therefor is usually 30 days or less, preferably ten days or less, and more preferably four days or less.

A method for varying the temperature after reaching the maximum attained temperature is not particularly limited. The following methods can be used: various methods such as a stepwise cooling method, a vibrating or fluctuating method at a temperature not lower than the maximum attained temperature, and combinations of these methods. In usual, in view of the ease of control and the durability of obtained zeolite, it is preferred that after the maximum attained temperature is held, it is cooled to a temperature of 100°C to room temperature.

<Template-containing zeolite>

After hydrothermal synthesis, template-containing zeolite which is a product is separated from a hydrothermal synthesis reaction liquid. A method for separating the template-containing zeolite is not particularly limited. In usual, the template-containing zeolite is separated by filtration, decantation, or the like; is water-washed; and is then dried at a temperature of room temperature to 150°C or lower, whereby a product can be obtained.

Next, the templates are usually removed from the template-containing zeolite. A method thereof is not particularly limited. In usual, contained organic substances (templates) can be removed by calcination at a temperature of 400°C to 700°C in air, an oxygen-containing inert gas, or an inert gas atmosphere or by a method such as extraction using an extraction solvent such as an aqueous solution of ethanol or HCl-containing ether. The templates are preferably removed by calcination in view of productivity.

However, in the present invention, the zeolite can be used to support metal without removing the templates from the zeolite as described below.

{Supported metal}

In the catalyst according to the present invention, metal is supported on the above zeolite.

<Metal>

In the present invention, the metal supported on the zeolite is not particularly limited; may exhibit catalytic activity after being supported on the zeolite; and is preferably selected from the group consisting of iron, cobalt, palladium, iridium, platinum, copper, silver, gold, cerium, lanthanum, praseodymium, titanium, and zirconia. The metal supported on the zeolite may be one of these metals. Two or more of these metals may be supported on the zeolite in combination. The metal supported on the zeolite is more preferably iron and/or copper and particularly preferably copper.

In the present invention, the term "metal" is not necessarily limited to an elemental or zero-valent one and includes the state of being supported in a catalyst, for example, the state of being ionic or another species in the case of "metal".

<Support amount>

In the catalyst according to the present invention, the amount of the metal supported on the zeolite is not particularly limited. The amount thereof is usually 0.1% or more, preferably 0.5% or more, and more preferably 1% or more in terms of the weight proportion of the metal to the zeolite. The amount thereof is usually 10% or less, preferably 8% or less, and more preferably 5% or less. When the amount of the supported metal is less than the above lower limit, the number of active sites tends to be small and catalytic performance is not exhibited in some cases. When the amount of the supported metal is more than the above upper limit, the aggregation of the metal tends to be significant and catalytic performance decreases in some cases.

<Method for supporting metal>

A method for supporting the metal on the zeolite during the production of the catalyst according to the present invention is not particularly limited. The following method is generally used: an ion exchange method, an impregnation supporting method, a precipitation supporting method, a solid-phase ion exchange method, a CVD method, or the like. The ion exchange method and the impregnation supporting method are preferred.

A metal source of the supported metal is not particularly limited and may be a metal salt, a metal complex, a metal piece, a metal oxide, or the like. A salt of the supported metal is usually used. For example, inorganic acid salts such as nitrates, sulfates, and hydrochlorates and organic acid salts such as acetates can be used. The metal source may be soluble or insoluble in a dispersion medium below.

In the catalyst according to the present invention, the metal may be supported on the zeolite from which the templates are removed. Alternatively, after the metal is supported on the zeolite containing the templates, the templates may be removed. In view of the fact that production steps are few and simple, the templates are preferably removed after the metal is supported on the zeolite containing the templates.

In the case of supporting the metal on the zeolite by an ion exchange method, the zeolite from which the templates are removed by calcination or the like is preferably used in a common ion exchange method. This is because ion-exchanged zeolite can be produced in such a way that the metal exchanges ions with pores from which the templates are removed; however, the zeolite containing the templates cannot be subjected to ion exchange and therefore is unsuitable for supporting the metal by an ion exchange method.

In the case of supporting the metal after the templates are removed, the templates contained in the zeolite can be removed by various methods such as a method in which calcine is performed usually at a temperature of 400°C to 700°C in air, an oxygen-containing inert gas, or an inert gas atmosphere and a method in which extraction is performed using an extraction solvent such as an aqueous solution of ethanol or HCl-containing ether as described above.

In the case of using no ion exchange method to support the metal, the catalyst can be produced in such a way that the zeolite containing the templates is used, the dispersion medium is removed from a mixed dispersion containing the zeolite and the metal source, and the metal is then supported simultaneously with the removal of the templates by performing a calcination step below. A metal-supporting method rather than an ion exchange method is advantageous in production because calcination for removing the templates can be omitted. An "impregnation supporting method" is cited as such a supporting method.

In the case of using the impregnation supporting method, calcination is performed after the dispersion medium is removed from the mixed dispersion, which contains the zeolite (the zeolite may contain the templates or may be separated from the templates and preferably contain the templates) and the metal source. When the dispersion medium is removed, the mixed dispersion is preferably dried in a short time from a slurry state in general and is preferably dried by a spray drying method.

The calcination temperature after drying is not particularly limited. The calcination temperature is usually 400°C or higher, preferably 600°C or higher, more preferably 700°C or higher, and further more preferably 800°C or higher. The upper limit is usually 1,000°C or lower and preferably 900°C or lower. When the calcination temperature is lower than the above lower limit, the metal source is not decomposed in some cases. In order to increase the dispersibility of the metal on the zeolite and in order to increase the interaction between the metal and the surface of the zeolite, the calcination temperature is preferably high. However, when the calcination temperature is higher than the above upper limit, the structure of the zeolite may possibly be destroyed.

In the production of the catalyst according to the present invention, when the amount of water adsorbed on the catalyst according to the present invention needs to be adjusted by intentionally destroying a portion of the structure of the zeolite in a step of supporting the metal on the zeolite, the above calcination is performed at higher temperature (for example, 900°C or higher) or the flow rate of gas used in calcination below is set to a large value in some cases. That is, the structure of the zeolite is gradually destroyed by calcination within the range of 900°C to 1,000°C in some cases depending on the type of the zeolite or the amount of the metal supported thereon. Thus, the catalyst according to the present invention can be produced so as to have a water adsorption capacity of 0.2 (kg-water/kg-catalyst) or less in such a way that the structure of the zeolite is intentionally destroyed in a calcination step and, for example, zeolite having a water adsorption capacity of 0.25 to 0.35 (kg-water/kg-catalyst) at a relative vapor pressure of 0.5 in a water vapor adsorption isotherm at 25°C is used. In particular, the catalyst preferably has a water adsorption capacity of 0.05 (kg-water/kg-catalyst) or more and 0.2 (kg-water/kg-catalyst) or less because the catalyst is free from the problem of catalytic deterioration due to adsorbed water during a rapid temperature rise and has excellent nitrogen oxide removal performance and retentivity thereof.

An atmosphere for the above calcination is not particularly limited. The calcination is performed in air, or an inert atmosphere such as a nitrogen gas or an argon gas. The atmosphere may contain water vapor.

A method for the calcination is not particularly limited and may use a muffle furnace, a kiln, a fluidized-bed furnace, or the like. A method in which calcination is performed under a flow of the above atmosphere gas is preferred.

The flow rate of gas is not particularly limited. The flow rate thereof is usually 0.1 ml/minute or more and preferably 5 ml/minute or more per 1 g of powder to be calcined. The flow rate thereof is usually 100 ml/minute or less and preferably 20 ml/minute or less.

When flow rate of gas per 1 g of powder to be calcined is less than the above lower limit, an acid derived from the metal source remaining in dry powder is not removed and therefore the zeolite may possibly be destroyed. When flow rate is more than the above upper limit, powder is scattered in some cases.

{Other components}

The catalyst according to the present invention may contain metal oxide particles with an average size of 0.1 $\mu$m to 10 $\mu$m and/or an inorganic binder in addition to the zeolite and preferably contains both the metal oxide particles with an average size of 0.1 $\mu$m to 10 $\mu$m and the inorganic binder. When these components are contained therein, the catalyst is excellent in catalytic deterioration, nitrogen oxide removal performance, and retentivity thereof and is allowed to have a water adsorption capacity of 0.2 (kg-water/kg-catalyst) or less as described above.

Metal in the metal oxide particles with an average size of 0.1 $\mu$m to 10 $\mu$m is preferably one of aluminum, silicon, titanium, cerium, and niobium or a combination of two or more of these metals. The average size of the metal oxide particles is preferably 0.1 $\mu$m to 5 $\mu$m and more preferably 0.1 $\mu$m to 3 $\mu$m. The term "average size of metal oxide particles" as used herein refers to the average primary particle size of arbitrary ten to 30 metal oxide particles in the case of observing the metal oxide particles with an electron microscope.

The inorganic binder used is silica sol, alumina sol, titania sol, ceria sol, and/or the like. These may be used alone or in combination. Among these, the silica sol is preferred because the silica sol has the ability to adhere to zeolites and is inexpensive. The inorganic binder is preferably inorganic oxide sol with an average particle size of 5 nm to 100 nm, preferably 4 nm to 60 nm, and more preferably 10 nm to 40 nm. This average particle size refers to that determined by substantially the same method as that used to determine the particle size of the metal oxide.

In the case of using the metal oxide particles and the inorganic binder, the timing of addition thereof is not particularly limited. For example, after copper is supported on the zeolite, the metal oxide particles and the inorganic binder may be added before or after calcination. The sum of the additive amounts thereof is 0.1% to 100% and preferably 0.5% to 50% by weight of the catalyst.

{Zeolite content}

When the catalyst does not contain other components such as the metal oxide particles and/or the inorganic binder, the content of the zeolite in the catalyst according to the present invention is a value satisfying the preferred amount of the supported metal. In particular, when the catalyst contains other components such as the metal oxide particles and/or the inorganic binder, the content of the zeolite (the content of the zeolite containing the supported metal) is preferably 30% to 99.9%, more preferably 40% to 99%, and particularly preferably 50% to 90% by weight.

When content of the zeolite in the catalyst according to the present invention is not less than the above lower limit, high nitrogen oxide removal performance can be achieved.

{Particle size}

The particle size of the catalyst according to the present invention is not particularly limited. In the case of using the catalyst to remove nitrogen oxide, the particle size thereof is usually 15 $\mu$m or less and preferably 10 $\mu$m or less in terms of average primary particle size and the lower limit thereof is usually 0.1 $\mu$m. When the particle size of the catalyst is extremely large, the specific surface area per unit weight is small. Therefore, the efficiency of contact with gas to be treated is poor and thus the efficiency of removing nitrogen oxide is inferior. When the particle size of the catalyst is extremely small, the handleability thereof is poor. Thus, the calcined catalyst obtained by supporting the metal on the zeolite or the calcined catalyst obtained by adding other components may be dry-pulverized in a jet mill or the like or may be wet-pulverized in a ball mill or the like as required. A method for determining the average primary particle size of the catalyst is substantially the same method as that used to determine the particle size of the metal oxide.

[Method for producing catalyst]

A method for producing the catalyst according to the present invention is not particularly limited. The catalyst is produced in such a way that, for example, a mixed slurry is prepared by mixing a dispersion medium with the metal source of the supported metal, the zeolite, other various additives, the metal oxide particles with an average size of 0.1 $\mu$m to 10 $\mu$m, and/or an inorganic binder, which is used as required; the dispersion medium is removed by drying the mixed slurry; and dry powder obtained thereby is calcined.

As the various additives, those used for the purpose of adjusting the viscosity of the mixed dispersion or used for the purpose of controlling the shape or size of particles of the catalyst separated from the dispersion medium are preferably used in addition to the above components. The type of the additives is not particularly limited. The additives are preferably inorganic additives and include inorganic sols (preferably silica sol) such as silica sol, alumina sol, and titania sol; clay-based additives such as sepiolite, montmorillonite, and kaolin; silicones (including those containing an OH group derived from a portion of a substituent of a main chain having a polysiloxane bond by hydrolysis) that are polymers or oligomers containing a main chain having a polysiloxane bond; and various additives such as silicic acid solution-derived components. In the case of using these additives, the catalyst is finally produced so as to contain these additives. The inorganic sols usually have an average particle size of 4 nm to 60 nm and preferably 10 nm to 40 nm.

The amount of the added additives is not particularly limited. The amount thereof is 50% or less, preferably 20% or less, and more preferably 10% or less of the zeolite on a weight basis. When the weight ratio is more than the above upper limit, catalytic performance is reduced in some cases.

The dispersion medium used to produce the catalyst according to the present invention is a liquid for dispersing the zeolite. The type of the dispersion medium is not particularly limited. One or more of water, alcohol, ketone, and the like are usually used. The dispersion medium used is preferably water from the viewpoint of stability during heating.

The order of mixing during the preparation of the mixed slurry is not particularly limited. In usual, it is preferred that the metal source is dissolved or dispersed in the dispersion medium and the zeolite is mixed therewith.

In the case of using the metal oxide, the inorganic binder, and the various additives, these materials may be added to the dispersion medium in advance.

The proportion of a solid in slurry prepared by mixing the above components is preferably 5% to 60% by weight and more preferably 10% to 50% by weight. When the proportion of the solid in the slurry is less than the above lower limit, the amount of the dispersion medium to be removed is large and therefore a step of removing the dispersion medium is interfered with in some cases. When the proportion of the solid in the slurry is more than the above upper limit, the metal and components other than the zeolite are unlikely to be uniformly dispersed on the zeolite.

The zeolite used to prepare the mixed slurry may be the zeolite containing the templates or the zeolite separated from the templates as described above.

The preparation temperature of the mixed slurry is usually 0°C or higher and preferably 10°C or higher. The preparation temperature thereof is usually 80°C or lower and preferably 60°C or lower.

In usual, zeolites generate heat in some cases when being mixed with dispersion media. When the preparation temperature thereof is more than the above upper limit, the zeolite may possibly be decomposed by acid or alkali. The lower limit of the preparation temperature thereof is the melting point of the dispersion medium.

The pH during the preparation of the mixed slurry is not particularly limited. The pH is usually 3 or more, preferably 4 or more, and more preferably 5 or more. The pH is usually 10 or less, preferably 9 or less, and more preferably 8 or less. If the mixed slurry is prepared at a pH less than the above lower limit or more than the above upper limit, the zeolite may possibly be destroyed.

A mixing method used to prepare the mixed slurry may be a method capable of sufficiently mixing or dispersing the zeolite, the metal source, other components used as required, and various additives. A known method is used. In particular, stirring, ultrasound, a homogenizer, or the like is used.

<Drying of mixed slurry>

A method for drying the mixed slurry is not particularly limited and may be a method capable of removing the dispersion medium from the mixed slurry in a short time. A method capable of removing the dispersion medium in a short time by uniformly spraying the mixed slurry is preferred. The following method is more preferred: a method for removing the dispersion medium in such a way that the mixed slurry is uniformly sprayed and is then contacted with a high-temperature heat carrier. The following method is further more preferred: a method capable of obtaining uniform powder in such a way that the mixed slurry is uniformly sprayed and is then contacted with a hot blast such that the mixed slurry is dried and the dispersion medium is removed therefrom. Therefore, a spray drying  method is preferably used.

In the present invention, in the case of using spray drying to dry the mixed slurry, centrifugal atomization using a rotary disk, pressure atomization using a pressure nozzle, atomization using a two-fluid nozzle or a four-fluid nozzle, or the like can be used as a spraying method.

The sprayed slurry is contacted with a heated metal plate or a heat carrier such as hot gas, whereby the dispersion medium is removed. In both cases, the temperature of the dispersion medium is not particularly limited and is usually 80°C or higher and 350°C or less. When the temperature of the dispersion medium is lower than the above lower limit, the dispersion medium cannot be sufficiently removed from the mixed slurry in some cases. When the temperature of the dispersion medium is higher than the above upper limit, the metal source is decomposed and the metal oxide is aggregated in some cases.

Spray drying conditions are not particularly limited. Spray drying is performed usually at a gas inlet temperature of about 200°C to 300°C and a gas outlet temperature of about 60°C to 200°C.

The drying time taken to remove the dispersion medium by drying the mixed slurry is preferably 60 minutes or less, more preferably ten minutes or less, further more preferably one minute or less, and particularly preferably ten seconds or less. The mixed slurry is preferably dried in a shorter time. The lower limit of the drying time is not particularly limited and is usually 0.1 seconds or more.

If a time longer than the above upper limit is taken to perform drying, then a reduction in catalytic activity is caused because the metal source is aggregated on the surface of the zeolite on which the metal is to be supported and therefore the metal is unevenly supported thereon. In general, metal source are acidic or alkaline. Therefore, if the zeolite is exposed to high-temperature conditions for a long time in the presence of the dispersion medium in such a state that the zeolite contains metals thereof, then the destruction of the structure of the zeolite having the metal supported thereon is probably promoted. Therefore, an increase in drying time probably causes a reduction in catalytic activity.

The term "the drying time taken to remove the dispersion medium from the mixed slurry" as used herein refers to the time taken to reduce the amount of the dispersion medium in dry matter to 1% by weight or less. When the dispersion medium is water, the term "drying time" refers to the time taken to reduce the content of water in dry matter to 1% by weight or less from the point of time when the temperature of the mixed slurry reaches 80°C or higher. When the dispersion medium is other than water, the term "drying time" refers to the time taken to reduce the content of the recording medium in dry matter to 1% by weight or less from the point of time when it reaches a temperature 20°C lower than the boiling point of the dispersion medium at atmospheric pressure.

The particle size of dry powder obtained by removing the dispersion medium by drying the mixed slurry is not particularly limited. The mixed slurry is preferably dried such that drying can be finished in a short time and the particle size thereof is usually 1 mm or less, preferably 200 $\mu$m or less, and usually 2 $\mu$m or more.

<Calcination of dry powder>

The dry powder obtained by the above drying is subsequently calcined, whereby the catalyst according to the present invention is obtained.

A method for calcining the dry powder is not particularly limited and may use a muffle furnace, a kiln, a  fluidized-bed furnace, or the like. A method in which calcination is performed under a flow of gas is preferred.

Gas flowing during calcination is not particularly limited and may be air, nitrogen, oxygen, helium, argon, or a mixture of these gases. Air is preferably used. The flowing gas may contain water vapor. Calcination can be performed in a reducing atmosphere. In this case, the dry powder may be calcined in such a way that hydrogen is mixed with the flowing gas or an organic substance such as oxalic acid is mixed with the dry powder.

The flow rate of gas is not particularly limited. The flow rate of gas is usually 0.1 ml/minute or more and preferably 5 ml/minute or more per 1 g of powder to be calcined. The flow rate thereof is usually 100 ml/minute or less and preferably 20 ml/minute or less. When the flow rate of gas per 1 g of powder is less than the above lower limit, acid remaining in the dry powder is not removed during heating and therefore the zeolite may possibly be destroyed. When the flow rate thereof is more than the above upper limit, powder is scattered in some cases.

The calcination temperature is not particularly limited. The calcination temperature is usually 400°C or higher, preferably 500°C or higher, more preferably 600°C or higher, further more preferably 700°C or higher, and particularly preferably 800°C or higher. The calcination temperature is usually 1,100°C or lower, preferably 1,000°C or lower, and particularly preferably 950°C or lower. When the calcination temperature is lower than the above lower limit, the metal source is not decomposed in some cases. When the calcination temperature is higher than the above upper limit, the structure of the zeolite may possibly be destroyed.

The calcination time varies depending on the calcination temperature. The calcination time is usually one minute to three days, preferably 0.5 hours to 24 hours, and more preferably one hour to ten hours. When the calcination time is extremely short, the metal source is not decomposed in some cases. In contrast, when the calcination time is unnecessarily long, any effect due to calcination is not achieved and production efficiency is reduced.

After calcination, the obtained catalyst may be dry-pulverized in a jet mill or the like or may be wet-pulverized in a ball mill or the like as described above.

{Solid-state $^{29}$Si-DD/MAS-NMR spectrum}

The catalyst according to the present invention contains zeolite having a framework structure containing at least aluminum atoms, phosphorus atoms, and silicon atoms and metal supported on the zeolite and satisfies one or more of Conditions (i) to (iii) below. The catalyst preferably satisfies two or more of Conditions (i) to (iii) and more preferably all of Conditions (i) to (iii).

Condition (i): the integrated intensity area of a signal intensity of -130 ppm to -92.5 ppm is 41% or more of the integrated intensity area of a signal intensity of -130 ppm to -50 ppm in the case of measuring a solid-state $^{29}$Si-DD/MAS-NMR spectrum after water adsorption.

Condition (ii): the integrated intensity area of a signal intensity of -130 ppm to -100 ppm is 17% or more of the integrated intensity area of a signal intensity of -130 ppm to -50 ppm in the case of measuring a solid-state $^{29}$Si-DD/MAS-NMR spectrum after water adsorption.

Condition (iii): the difference obtained by subtracting the position of the top of a peak in a range from -87.5 ppm to -97.5 ppm in a solid-state $^{29}$Si-DD/MAS-NMR spectrum after drying from the position of the top of a peak in a range from -87.5 ppm to -97.5 ppm in a solid-state $^{29}$Si-DD/MAS-NMR spectrum after water adsorption is 4.5 ppm or less.

The term "water-adsorbed catalyst" as used herein refers to a catalyst that is sampled in a solid-state NMR sample tube and is then sufficiently adsorbed water in such a way that the solid-state NMR sample tube is left in a desiccator filled with a saturated aqueous solution of ammonium chloride for one night or more. The term "dried catalyst" as used herein refers to one obtained by vacuum-drying the water-adsorbed catalyst at 120°C for two hours or more in a Schlenk tube.

Conditions (i) to (iii) are described below.

The catalyst according to the present invention is one which is obtained by supporting the metal on the zeolite and in which the integrated intensity area of a signal intensity of about -92.5 ppm is usually large in a solid-state $^{29}$Si-DD/MAS-NMR spectrum measured after water adsorption.

That is, in usual, silicon atoms in a zeolite framework take an $Si(OX)_n(OY)_{4n}$ (where X and Y each represents an atom such as Al, P, Si, or H and n is 0 to 2) type of bond. A peak observed at about -92.5 ppm by the solid-state $^{29}$Si-DD/MAS-NMR of dry silicoaluminophosphate zeolite corresponds to the case where both X and Y are Al, that is, $Si(OAl)_4$. In general, in the solid-state $^{29}$Si-DD/MAS-NMR of dry silicoaluminophosphate zeolite, the bond angle or bond length of Si-O-Al varies and a peak corresponding to $Si(OAl)_4$ shifts to about -90.0 ppm because of the adsorption of water. The repetition of the adsorption and desorption of water causes the change of an Si-O-Al bond to be repeated, whereby the structure of a zeolite framework will be destroyed. If the structure of the zeolite framework is destroyed, then the reduction in activity of a catalyst is caused through the reduction in surface area of the catalyst, the reduction of the number of active sites of the catalyst, or the like. Therefore, it is probably preferred that the integrated intensity area of a signal intensity of about -90.0 ppm is small and the integrated intensity area of a signal intensity of about -92.5 ppm is large in a water-adsorbed state.

Therefore, in a first embodiment of the present invention, the integrated intensity area of a signal intensity of -130 ppm to -92.5 ppm is preferably 41% or more, more preferably 42% or more, and further more preferably 43% or more of the integrated intensity area of a signal intensity of -130 ppm to -50 ppm in a solid-state $^{29}$Si-DD/MAS-NMR spectrum of a water-adsorbed catalyst (Condition (i)). The upper limit of this value is 100%. This case corresponds to a case where all silicon atoms have at least one Si-O-Si bond in a second embodiment of the present invention as described below.

When dry silicoaluminophosphate zeolite is adsorbed water, the change in bond angle or bond length of Si-O-Al in an $Si(OAl)_4$ site is preferably small.

Therefore, in a third embodiment of the present invention, the difference obtained by subtracting the position of the top of a peak in a range from -87.5 ppm to - 97.5 ppm in the solid-state $^{29}$Si-DD/MAS-NMR of a catalyst in a dry state from the position of the top of a peak in a range from -87.5 ppm to -97.5 ppm in the solid-state $^{29}$Si-DD/MAS-NMR of the catalyst in a water-adsorbed state is preferably 4.5 ppm or less and more preferably 3.0 ppm or less (Condition (iii)). Since it is preferred that the bond angle or bond length of Si-O-Al is not varied at all, the lower limit of the difference between the peak top positions is 0 ppm. When there are a plurality of peaks having the same intensity in a range from -87.5 ppm to -97.5 ppm, the term "the position of the top of a peak" refers to the position of the top of a peak closest to the high magnetic field side.

A peak near -110 ppm corresponds to the case where both X and Y are silicon atoms and shows that an $SiO_2$ domain is formed. Such an Si-O-Si bond is stable to hydrolysis and therefore a catalyst having an $SiO_2$ domain where silicon atoms gather probably has high durability to the repetitive adsorption and desorption of water vapor. Therefore, the integrated intensity area of a signal intensity of about - 110 ppm is preferably large.

Therefore, in the second embodiment of the present invention, the integrated intensity area of a signal intensity of -130 ppm to -100 ppm is 17% or more, preferably 20% or more, and more preferably 22% or more of the integrated intensity area of a signal intensity of -130 ppm to -50 ppm in a solid-state $^{29}$Si-DD/MAS-NMR spectrum of a catalyst in a water-adsorbed state (Condition (ii)). The upper limit of this value is 100%. This corresponds to a case where all silicon atoms have at least one Si-O-Si bond.

[Device for removing nitrogen oxide]

The catalyst according to the present invention or a catalyst mixture containing the catalyst can be used as a device for removing nitrogen oxide in various fields in such a way that the catalyst or the catalyst mixture is formed into a predetermined shape by granulation, forming (including film formation), or the like. In particular, a device including the catalyst according to the present invention(hereinafter the device is referred to as a "removing device according to the present invention" in some cases), for removing nitrogen oxide according to the present invention is useful as an automotive exhaust gas catalyst (SCR catalyst) and applications thereof are not limited to automotive purposes.

A method for granulating or forming the catalyst according to the present invention is not particularly limited. Various methods can be used to granulate or form the catalyst according to the present invention. In usual, the catalyst mixture, which contains the catalyst according to the present invention, is formed and is used as a form. The shape of the form is preferably a honeycomb shape.

In the case of using the device for removing nitrogen oxide according to the present invention to purify exhaust gas from automobiles and the like, the device for removing nitrogen oxide according to the present invention manufactured in such a way that, for example, slurry is prepared by mixing the catalyst according to the present invention with an inorganic binder, an organic binder, or one (hereinafter referred to as a binder precursor in some cases), such as silicone, a silicic acid solution, specific silica sol, or specific alumina sol, exhibiting a binder function through modification by crosslinking or reaction, is applied to the surface of a honeycombed form prepared from an inorganic mineral such as cordierite, and is then calcined.

The device, including the catalyst according to the present invention, for removing nitrogen oxide may contain inorganic fibers such as alumina fibers and glass fibers. A honeycombed removing device can be preferably manufactured in such a way that a mixture containing the inorganic fibers and the catalyst is subjected to forming such as extrusion or pressing and is then calcined. A known method is used to manufacture these devices.

[Method for using catalyst]

The catalyst according to the present invention and the device for removing nitrogen oxide is usable in a nitrogen oxide removal system. In the present invention, the term "nitrogen oxide removal system" includes all machinery and equipment including the device for removing nitrogen oxide according to the present invention if nitrogen oxide is contacted with the device for removing nitrogen oxide according to the present invention and is thereby removed. The system may include devices other than the device for removing nitrogen oxide according to the present invention. The system may include, for example, devices such as urea tanks, aqueous urea solution sprayers, urea decomposers, CO oxidation catalysts, HC oxidation catalysts, NO oxidation catalysts, diesel particulate filters (DPFs), and ammonia decomposition catalysts. The arrangement of devices in the system is not particularly limited. For example, a urea tank, an aqueous urea solution sprayer, a urea decomposer, a CO oxidation catalyst, an HC oxidation catalyst, an NO oxidation catalyst, a DPF, and the like are usually arranged upstream of the device for removing nitrogen oxide according to the present invention and an ammonia removal catalyst and the like are usually arranged downstream of the device for removing nitrogen oxide.

The exhaust gas may contain components other than nitrogen oxide. The exhaust gas may contain, for example, hydrocarbons, carbon monoxide, carbon dioxide, hydrogen, nitrogen, oxygen, sulfur oxide, and water.

Examples of a nitrogen oxide-containing exhaust gas include various nitrogen oxide-containing exhaust gases emitted from diesel automobiles; gasoline automobiles; various diesel engines for stationary power generators, ships, agricultural machines, construction machines, motorcycles, and aircrafts; boilers; gas turbines; and the like.

In the case of treating the nitrogen oxide-containing exhaust gas using the catalyst according to the present invention or the device for removing nitrogen oxide, conditions for contacting the nitrogen oxide-containing exhaust gas with the catalyst according to the present invention or the removing device are not particularly limited. The space velocity of the exhaust gas to be treated usually 100/h or more and preferably 1,000/h or more. The space velocity thereof is usually 500,000/h or less and preferably 100,000/h or less. The temperature of the contacted exhaust gas is usually 100°C or higher and preferably 150°C or higher. The temperature thereof is usually 700°C or lower and preferably 500°C or lower.

The catalyst or the removing device can be used in the presence of a reducing agent during the treatment of such exhaust gas. The presence of the reducing agent allows purification to proceed efficiently. The reducing agent is one or more of ammonia, urea, organic amines, carbon monoxide, hydrocarbons, hydrogen, and the like. Ammonia or urea is preferably used.

The amount of the reducing agent in treated gas can be reduced in such a way that a step of decomposing the reducing agent with a catalyst for oxidizing the surplus of the reducing agent not consumed in removing nitrogen oxide is provided downstream of a removal step of removing nitrogen oxide in exhaust gas using the catalyst according to the present invention or the device for removing nitrogen oxide. In this case, a catalyst prepared by supporting metal such as a platinum group metal on a support such as zeolite for adsorbing the reducing agent can be used as an oxidizing agent. The above-mentioned zeolite used in the present invention and the catalyst according to the present invention can be used as this zeolite and the oxidizing agent, respectively.


Examples

The present invention is further described below with reference to examples. The present invention is not limited to the examples within the scope thereof.

In the examples and comparative examples below, the evaluation of catalytic activity and the measurement of solid-state $^{29}$Si-DD/MAS-NMR spectra were performed under conditions below.


[Method for evaluating catalytic activity]

Each prepared catalyst was evaluated for catalytic activity on the basis of a method below.

The prepared catalyst was press-formed and was then crushed into particles, which were screened through a 16- to 28-mesh sieve. In an atmospheric pressure fixed-bed flow reactor, 1 ml of screened particles of the catalyst were filled. A catalyst layer was heated in such a way that gas having a composition shown in Table 1 was fed through the catalyst layer at 1,670 ml/min (a space velocity SV of 100,000/h). When the outlet NO concentration become constant at each of temperatures of 150°C, 200°C, and 500°C, the NO removal rate was calculated using the following equation and was defined as the nitrogen oxide-removing activity of the catalyst:


$$\text{NO removal rate} = \{(\text{inlet NO concentration}) - (\text{outlet NO concentration})\} / (\text{inlet NO concentration}) \times 100$$


[Table 1]

| Gas component | Concentration |
|---|---|
| NO | 350ppm |
| NH$_3$ | 385ppm |
| O$_2$ | 15% by volume |
| H$_2$O | 5% by volume |
| N$_2$ | Balance |


The evaluation of catalytic activity was performed before and after a repetitive water vapor adsorption-desorption test below. Results thereof were summarized in Table 3C.

[Repetitive water vapor adsorption-desorption durability test (90°C-60°C-5°C repetitive water vapor adsorption-desorption test) for catalysts]

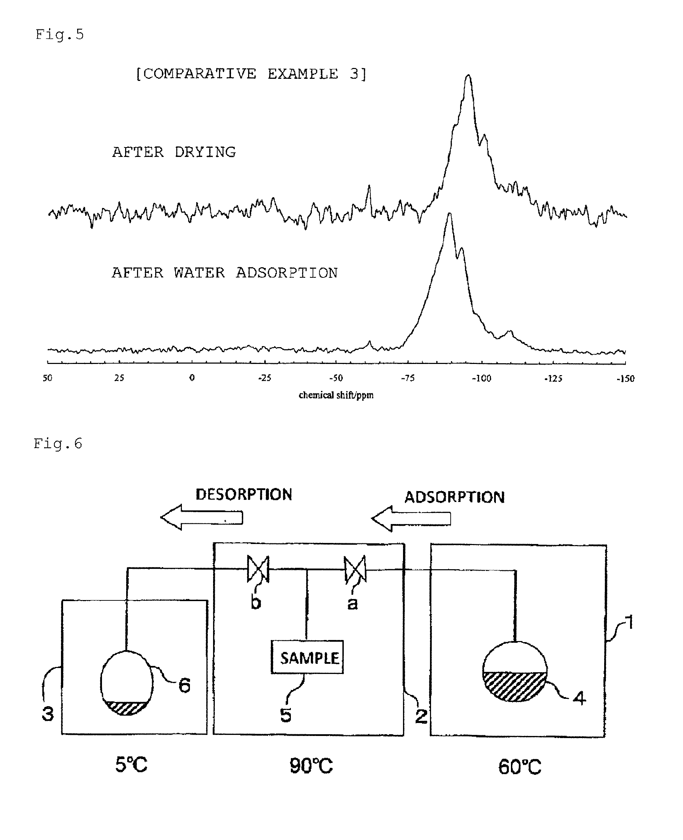

A "90°C-60°C-5°C repetitive water vapor adsorption-desorption test" for catalysts was performed under repetitive adsorption-desorption test conditions close to actual conditions using a testing apparatus shown in Fig. 6.

With reference to Fig. 6, reference numeral 1 represents a constant-temperature chamber held at 60°C, reference numeral 2 represents a constant-temperature chamber held at 90°C, and reference numeral 3 represents a constant-temperature chamber held at 5°C. A vessel 4 filled with saturated water vapor is placed in the constant-temperature chamber 1, a vacuum vessel 5 holding a sample is placed in the constant-temperature chamber 2, and a vessel 6 serving as a water reservoir is placed in the constant-temperature chamber 3. The vessel 4 and the vacuum vessel 5 are connected to each other through a pipe having a valve a and the vessel 6 and the are connected to each other through a pipe having a valve b.

The sample is retained in the vacuum vessel 5 held at 90°C and the following operations are repeated: an operation of exposing the sample to a 5°C saturated water vapor atmosphere (a relative humidity of 1% at 90°C) for 90 seconds and an operation of exposing the sample to a 60°C saturated water vapor atmosphere (a relative humidity of 28% at 90°C) for 90 seconds. That is, in the operation of exposing the sample to the 60°C saturated water vapor atmosphere, the valve a is opened (the valve b is kept closed) as shown in Fig. 6. After this state is maintained for 90 seconds, the valve b is opened as soon as the valve a is closed. In this moment, a portion of water adsorbed on the sample 1 exposed to the 60°C saturated water vapor atmosphere is desorbed in the 5°C saturated water vapor atmosphere to migrate to the vessel 6 of a water reservoir held at 5°C. This state is maintained for 90 seconds.

The above adsorption and desorption are repeated 2,000 times.

The sample recovered after the test was evaluated for NO removal rate on the basis of conditions for the method for evaluating catalytic activity.

The test is one reproducing conditions close to actual conditions. Exhaust gas from diesel engines of automobiles or the like contains 5% to 15% by volume of water. In a moving automobile, exhaust gas reaches a high temperature of 200°C or higher, the relative humidity decreases to 5% or less, and a catalyst gets into such a state that water is desorbed. However, during stopping, the relative humidity increases to 15% or more at about 90°C and the catalyst adsorbs water. Under the conditions, the relative humidity reaches 28% during adsorption at 90°C. Cycle durability in a state close to the actual conditions is important for installation.

[Analysis of zeolite composition]

A sample was subjected to alkali fusion and then acid dissolution and a solution thereby obtained was analyzed by inductively coupled plasma atomic emission spectroscopy (ICP-AES).

[Solid-state $^{29}$Si-DD/MAS-NMR spectrum]

A solid-state $^{29}$Si-DD/MAS-NMR spectrum after water adsorption was measured as follows: a sample was sampled in a solid-state NMR sample tube, was sufficiently water-adsorbed in such a way that the solid-state NMR sample tube was left in a desiccator filled with a saturated aqueous solution of ammonium chloride over one night or more, was hermetically sealed, and was then measured under conditions shown in Table 2 using silicone rubber as a reference substance.

A solid-state $^{29}$Si-DD/MAS-NMR spectrum after drying was measured as follows: the water-adsorbed sample was vacuum-dried at 120°C for two hours or more in a Schlenk tube, was sampled in a nitrogen atmosphere, and was then measured under conditions shown in Table 2 using silicone rubber as a reference substance.

[Table 2]

| Instrument | Varian NMR Systems 400WB |
|---|---|
| Probe | 7.5mm $\phi$ CP/MAS probe |
| Measurement method | DD (Dipolar Decoupling) / MAS (Magic Angle Spinning) method |
| $^{29}$Si resonance frequency | 79.43MHz |
| $^{29}$Si 90° pulse width | 5 $\mu$ seconds |
| 1H decoupling frequency | 50kHz |

(continued)

| MAS rotational frequency | 4kHz |
|---|---|
| Waiting time | 60 seconds |
| Measurement temperature | Room temperature |
| Spectral width | 30.49kHz |
| Number of scans | 1280 |
| Chemical shift reference | Silicone rubber is assigned to 22.333 ppm. |

[Example 1]

The following materials were mixed, followed by stirring for two hours: 201.6 g of water, 67.8 g of 85% phosphoric acid, and 57.1 g of pseudo-boehmite (containing 25% water, produced by Sasol Ltd.). To the mixture, 15.1 g of fumed silica (AEROSIL 200, produced by Nippon Aerosil Co., Ltd.), 228.1 g of water, 37.0 g of morpholine, and 42.9 g of triethylamine were added, followed by further stirring for two hours, whereby aqueous gel having the following composition was obtained:

$Al_2O_3/SiO_2/P_2O_5$/morpholine/triethylamine/$H_2O$ = 1/0.6/0.7/1/1/60 (molar ratio).

The aqueous gel was charged into a 1-L stainless steel autoclave, was heated to a maximum attained temperature of 190°C in a heating time of ten hours while being stirred, and was then held at 190°C for 24 hours. After reaction, it was cooled, was filtered, was water-washed, and was then dried at 100°C. Obtained dry powder was pulverized to a particle size of 3 μm to 5 μm using a jet mill and was then calcined at 700°C in an air flow, whereby templates were removed.
The measurement of zeolite obtained as described above by XRD showed a CHA structure (a framework density of 14.6 T/1000 Å$^3$).
Element analysis was performed by ICP spectrometry, resulting in that the composition proportion (molar ratio) of each component in the total of silicon atoms, aluminum atoms, and phosphorus atoms in a framework structure was as follows: x = 0.14 for the silicon atoms, y = 0.49 for the aluminum atoms, and z = 0.38 for the phosphorus atoms.
Next, 1.46 g of copper (II) acetate monohydrate (produced by Kishida Chemical Co., Ltd.) was added to and dissolved in 30 g of pure water and 15.0 g of the zeolite was added thereto, followed by stirring, whereby an aqueous slurry was obtained. To the aqueous slurry, 51.1 g of a 1 mol/L aqueous ammonia solution was carefully added dropwise such that the pH of the slurry did not exceed 7. The aqueous slurry was sprayed on a 170°C metal plate and was dried, whereby a catalyst precursor was obtained. The catalyst precursor was calcined at 750°C for two hours in an air flow, whereby an SCR catalyst containing 2.2% by weight copper supported thereon was obtained.

[Example 2]

The following materials were mixed, followed by stirring for three hours: 1,484 Kg of water, 592 kg of 75% phosphoric acid, and 440 kg of pseudo-boehmite (containing 25% water, produced by Sasol Ltd.). To the mixture, 117 kg of fumed silica (AEROSIL 200, produced by Nippon Aerosil Co., Ltd.) and 1,607 kg of water were added, followed by stirring for ten minutes. To this mixture, 285 kg of morpholine and 331 kg of triethylamine were added, followed by stirring for 1.5 hours, whereby aqueous gel having the following composition was obtained:

$Al_2O_3/SiO_2/P_2O_5$/morpholine/triethylamine/$H_2O$ = 1/0.6/0.7/1/1/60 (molar ratio).

The aqueous gel was charged into a 5-m$^3$ stainless steel autoclave, was heated to a maximum attained temperature of 190°C in a heating time of ten hours while being stirred, and was then held at 190°C for 24 hours. After reaction, it was cooled, was filtered, was water-washed, and was then vacuum-dried at 90°C. Obtained dry powder was pulverized to 3 μm to 5 μm using a jet mill and was then calcined at 750°C in an air flow, whereby templates were removed.
The measurement of zeolite obtained as described above by XRD showed a CHA structure (a framework density of 14.6 T/1000 Å$^3$). Element analysis was performed by ICP spectrometry, resulting in that the composition proportion (molar ratio) of each component in the total of silicon atoms, aluminum atoms, and phosphorus atoms in a framework structure was as follows: x = 0.17 for the silicon atoms, y = 0.52 for the aluminum atoms, and z = 0.31 for the phosphorus atoms.
By a method disclosed in Example 2A in WO 2010/084930, 2.8% by weight copper was supported on the zeolite obtained as described above, whereby an SCR catalyst was obtained.

[Comparative Example 1]

Silicoaluminophosphate zeolite was synthesized by a method disclosed in Example 1A in WO 2010/084930. The measurement of the obtained zeolite by XRD showed a CHA structure (a framework density of 14.6 T/1000 Å$^3$). The composition of the zeolite was analyzed by ICP spectrometry, resulting in that the composition proportion (molar ratio) of each component in the total of silicon atoms, aluminum atoms, and phosphorus atoms in a framework structure was as follows: x = 0.09 for the silicon atoms, y = 0.50 for the aluminum atoms, and z = 0.40 for the phosphorus atoms.
By a method disclosed in Example 2A in WO 2010/084930, 2.5% by weight copper was supported on the zeolite obtained as described above, whereby an SCR catalyst was obtained.

[Comparative Example 2]

Silicoaluminophosphate zeolite was synthesized by a method disclosed in Example 11 in WO 2009/099937. The measurement of the obtained zeolite by XRD showed a CHA structure (a framework density of 14.6 T/1000 Å$^3$). The composition of the zeolite was analyzed by ICP spectrometry, resulting in that the composition proportion (molar ratio) of each component in the total of silicon atoms, aluminum atoms, and phosphorus atoms in a framework structure was as follows: x = 0.16 for the silicon atoms, y = 0.49 for the aluminum atoms, and z = 0.34 for the phosphorus atoms.
Next, 1.17 g of copper (II) acetate monohydrate (produced by Kishida Chemical Co., Ltd.) was added to and dissolved in 24 g of pure water and 12.0 g of the zeolite was added thereto, followed by stirring, whereby an aqueous slurry was obtained. To the aqueous slurry, 34.0 g of a 1 mol/L aqueous ammonia solution was carefully added dropwise such that the pH of the slurry did not exceed 7. The aqueous slurry was sprayed on a 170°C metal plate and was dried, whereby a catalyst precursor was obtained. The catalyst precursor was calcined at 750°C for two hours in an air flow, whereby an SCR catalyst containing 1.8% by weight copper supported thereon was obtained.

[Comparative Example 3]

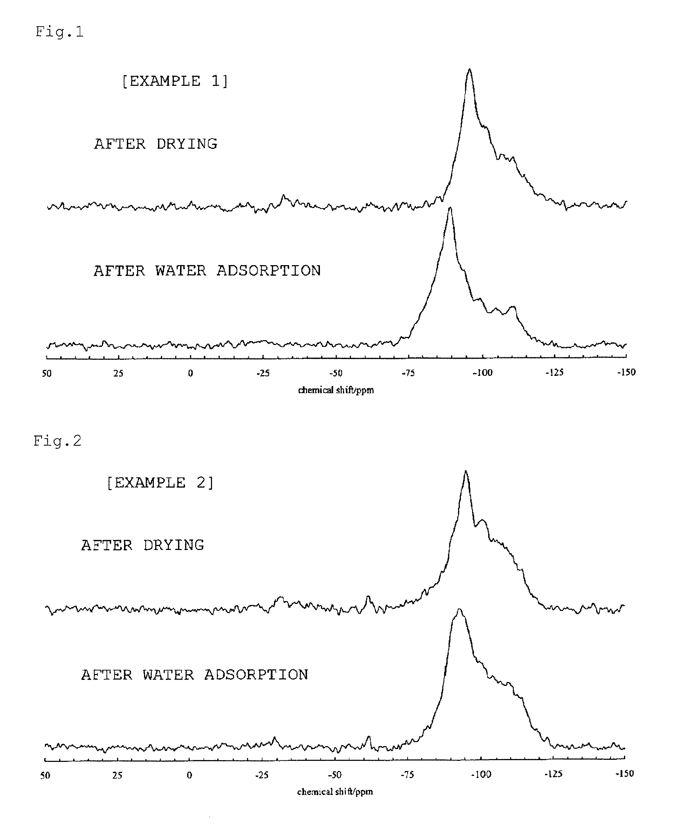

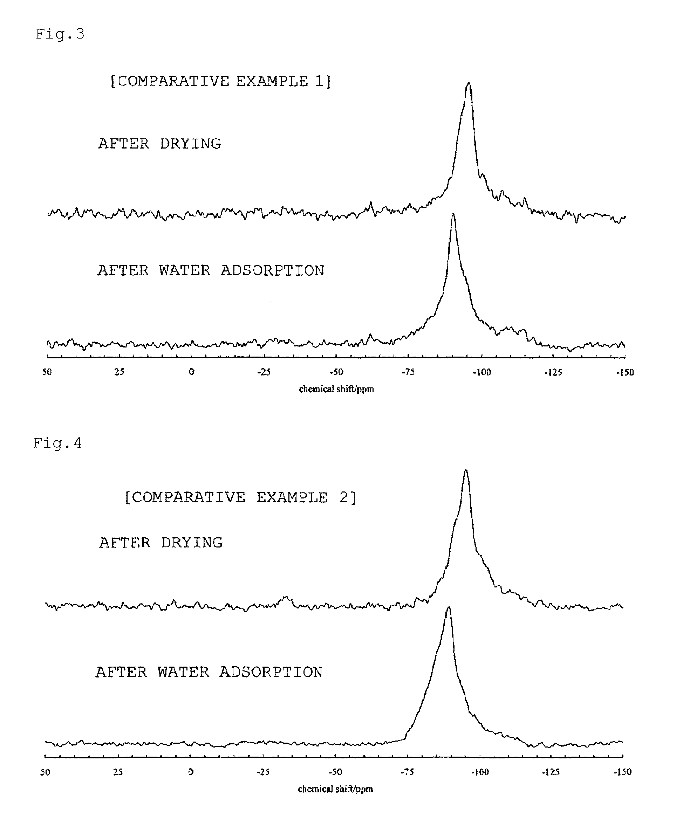

By a method disclosed in Example 11 in WO 2009/099937, 1.3% by weight copper was supported on the zeolite described in Comparative Example 2, whereby an SCR catalyst was obtained.
Tables 3A-3C show evaluation results of the SCR catalysts produced in Examples 1 and 2 and Comparative Examples 1 to 3. Figs. 1 to 5 show measured charts of solid-state $^{29}$Si-DD/MAS-NMR spectra of the SCR catalysts.

[Table 3A]

| | Zeolite composition | | | Proportion to integrated intensity area of -130 ppm to -50 ppm in solid-state $^{29}$Si-DD/MAS-NMR spectrum | |
| --- | --- | --- | --- | --- | --- |
| | Si (x) | Al (y) | P (z) | Integrated intensity area of -130 ppm to -92.5 ppm | Integrated intensity area of -130 ppm to -100 ppm |
| Example 1 | 0.14 | 0.49 | 0.38 | 43 | 22 |
| Example 2 | 0.17 | 0.52 | 0.31 | 71 | 39 |
| Comparative Example 1 | 0.09 | 0.50 | 0.40 | 40 | 16 |
| Comparative Example 2 | 0.16 | 0.49 | 0.34 | 25 | 8 |
| Comparative Example 3 | 0.16 | 0.49 | 0.34 | 34 | 11 |

[Table 3B]

| | Position of top of peak in range from -87.5 ppm to -97.5 ppm in solid-state $^{29}$Si-DD/MAS-NMR spectrum | | $\delta_1$-$\delta_2$ (ppm) |
| --- | --- | --- | --- |
| | After water adsorption ($\delta_1$/ppm) | After drying ($\delta_2$/ppm) | |
| Example 1 | -89.2 | -95.4 | 6.2 |
| Example 2 | -92.9 | -95.3 | 2.4 |
| Comparative Example 1 | -90.1 | -95.1 | 5.0 |

(continued)

| | Position of top of peak in range from -87.5 ppm to -97.5 ppm in solid-state $^{29}$Si-DD/MAS-NMR spectrum | | $\delta_1$-$\delta_2$ (ppm) |
|---|---|---|---|
| | After water adsorption ($\delta_1$/ppm) | After drying ($\delta_2$/ppm) | |
| Comparative Example 2 | -89.3 | -95.1 | 5.0 |
| Comparative Example 3 | -89.2 | -95.4 | 6.2 |

[Table 3C]

| | NO removal rate (%) (Before adsorption desorption-test) | | | NO removal rate (%) (After adsorption desorption-test) | | |
|---|---|---|---|---|---|---|
| | Reaction temperature | | | Reaction temperature | | |
| | 150°C | 200°C | 500°C | 150°C | 200°C | 500°C |
| Example 1 | 58 | 98 | 91 | 30 | 82 | 81 |
| Example 2 | 54 | 90 | 86 | 51 | 95 | 76 |
| Comparative Example 1 | 65 | 92 | 79 | 40 | 89 | 76 |
| Comparative Example 2 | 48 | 95 | 89 | 7 | 19 | 67 |
| Comparative Example 3 | 49 | 82 | 98 | 7 | 30 | 91 |

From Tables 3A-3C, it is clear that catalysts satisfying Conditions (i) to (iii) of the present invention have excellent NOx gas removal performance at both an exhaust gas temperature of 200°C or lower and an exhaust gas temperature of 500°C or higher and exhibit high durability to the repetitive adsorption and desorption of water vapor.

While the present invention has been described in detail with reference to specific embodiments, it is apparent to those skilled in the art that various modifications can be made without departing from the spirit and scope of the present invention.

This application is based on a Japanese patent application (Japanese Patent Application No. 2011-050321) filed on March 8, 2011, the entirety of which is incorporated herein by reference.

Reference Signs List

1, 2, 3   Constant-temperature chamber
4, 5, 6   Vessel
*a, b*   Valve

**Claims**

1. A catalyst containing zeolite having a framework structure containing at least aluminum atoms, phosphorus atoms, and silicon atoms and metal supported on the zeolite, wherein the integrated intensity area of a signal intensity of -130 ppm to -92.5 ppm is 41% or more of the integrated intensity area of a signal intensity of -130 ppm to -50 ppm in the case of measuring a solid-state $^{29}$Si-DD/MAS-NMR spectrum after water adsorption.

2. A catalyst containing zeolite having a framework structure containing at least aluminum atoms, phosphorus atoms, and silicon atoms and metal supported on the zeolite, wherein the integrated intensity area of a signal intensity of -130 ppm to -100 ppm is 17% or more of the integrated intensity area of a signal intensity of -130 ppm to -50 ppm in the case of measuring a solid-state $^{29}$Si-DD/MAS-NMR spectrum after water adsorption.

3. A catalyst containing zeolite having a framework structure containing at least aluminum atoms, phosphorus atoms, and silicon atoms and metal supported on the zeolite, wherein the difference obtained by subtracting the position of the top of a peak in a range from -87.5 ppm to -97.5 ppm in a solid-state $^{29}$Si-DD/MAS-NMR spectrum after drying from the position of the top of a peak in a range from -87.5 ppm to -97.5 ppm in a solid-state $^{29}$Si-DD/MAS-NMR spectrum after water adsorption is 4.5 ppm or less.

4. The catalyst according to any one of Claims 1 to 3, wherein the structure of the zeolite is CHA in the code assigned by IZA.

5. The catalyst according to any one of Claims 1 to 4 being for removing nitrogen oxide.

6. The catalyst according to any one of Claims 1 to 5, wherein x is 0.1 or more and 0.3 or less, y is 0.2 or more and 0.6 or less, and z is 0.2 or more and 0.6 or less, where x is assigned to the abundance of the silicon atoms with respect to the total of the silicon atoms, aluminum atoms, and phosphorus atoms contained in the framework structure of the zeolite, y is assigned to the abundance of the aluminum atoms with respect to the total of the silicon atoms, aluminum atoms, and phosphorus atoms contained in the framework structure of the zeolite, and z is assigned to the abundance of the phosphorus atoms with respect to the total of the silicon atoms, aluminum atoms, and phosphorus atoms contained in the framework structure of the zeolite.

7. The catalyst according to any one of Claims 1 to 6, wherein the zeolite is produced in such a way that a silicon atom source, an aluminum atom source, a phosphorus atom source, and templates are mixed and are then subjected to hydrothermal synthesis and the templates are one or more compounds selected from each of the following two groups:

(1) heteroalicyclic compounds containing a hetero atom such as a nitrogen atom and
(2) alkylamines.

8. The catalyst according to any one of Claims 1 to 7, wherein the metal supported on the zeolite is copper.

9. A device for removing nitrogen oxide, obtained by applying the catalyst according to any one of Claims 1 to 8 to a honeycombed form.

10. A device for removing nitrogen oxide, obtained by subjecting a mixture containing the catalyst according to any one of Claims 1 to 8 to forming.

11. A nitrogen oxide removal system, comprising the device for removing nitrogen oxide according to Claim 9 or 10.

12. A method for producing a catalyst comprising producing zeolite having a framework structure containing at least aluminum atoms and phosphorus atoms in such a way that a silicon atom source, an aluminum atom source, a phosphorus atom source, and templates are mixed and are then subjected to hydrothermal synthesis and supporting metal on the zeolite, wherein the templates used are one or more compounds selected from each of two groups, (1) heteroalicyclic compounds containing a hetero atom such as a nitrogen atom and (2) alkylamines, and the mixing ratio of the silicon atom source, the aluminum atom source, and the phosphorus atom source is set such that the value of $SiO_2/Al_2O_3$ is 0.5 or more and the value of $P_2O_5/Al_2O_3$ is 1.1 or less in terms of the molar ratio of oxides of the silicon atom source, the aluminum atom source, and the phosphorus atom source.

13. The method for producing the catalyst according to Claim 12, comprising preparing a mixed slurry by mixing a metal source of the supported metal and the zeolite with a dispersion medium and calcining powder obtained by removing the dispersion medium from the mixed slurry.

14. The method for producing the catalyst according to Claim 13, wherein the metal source is a salt of copper and/or iron.

15. The method for producing the catalyst according to Claim 13 or 14, wherein the time taken to remove the dispersion medium from the mixed slurry is 60 minutes or less.

16. The method for producing the catalyst according to any one of Claims 13 to 15, wherein the dispersion medium is removed in such a way that the mixed slurry is uniformly sprayed and is then dried by contacting the mixed slurry with hot air.

Fig.1

[EXAMPLE 1]

AFTER DRYING

AFTER WATER ADSORPTION

| 50 | 25 | 0 | -25 | -50 | -75 | -100 | -125 | -150 |

chemical shift/ppm

Fig.2

[EXAMPLE 2]

AFTER DRYING

AFTER WATER ADSORPTION

| 50 | 25 | 0 | -25 | -50 | -75 | -100 | -125 | -150 |

chemical shift/ppm

Fig.3

[COMPARATIVE EXAMPLE 1]

AFTER DRYING

AFTER WATER ADSORPTION

| 50 | 25 | 0 | -25 | -50 | -75 | -100 | -125 | -150 |

chemical shift/ppm

Fig.4

[COMPARATIVE EXAMPLE 2]

AFTER DRYING

AFTER WATER ADSORPTION

| 50 | 25 | 0 | -25 | -50 | -75 | -100 | -125 | -150 |

chemical shift/ppm

Fig.5

[COMPARATIVE EXAMPLE 3]

AFTER DRYING

AFTER WATER ADSORPTION

| 50 | 25 | 0 | -25 | -50 | -75 | -100 | -125 | -150 |

chemical shift/ppm

Fig.6

DESORPTION

ADSORPTION

b

a

SAMPLE

5

3

6

4

1

2

5°C

90°C

60°C

**INTERNATIONAL SEARCH REPORT**

| International application No. |
|---|
| PCT/JP2012/052069 |

A.   CLASSIFICATION OF SUBJECT MATTER
*B01J29/85*(2006.01)i, *B01D53/94*(2006.01)i, *B01J37/02*(2006.01)i, *C01B37/04*
(2006.01)i, *F01N3/10*(2006.01)i, *F01N3/28*(2006.01)i

According to International Patent Classification (IPC) or to both national classification and IPC

B.   FIELDS SEARCHED

Minimum documentation searched (classification system followed by classification symbols)
B01J29/85, B01D53/94, B01J37/02, C01B37/04, F01N3/10, F01N3/28

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| A | WO 2010/084930 A1  (Mitsubishi Chemical Corp.), 29 July 2010 (29.07.2010), entire text (Family: none) | 1-16 |
| A | WO 2009/141324 A1  (BASF SE), 26 November 2009 (26.11.2009), entire text & JP 2011-521871 A        & US 2011/0076229 A1 & EP 2297036 A             & CN 102099293 A | 1-16 |
| A | WO 2010/062730 A2  (BASF CATALYSTS L.L.C.), 03 June 2010 (03.06.2010), entire text & US 2010/0111796 A1    & EP 2352912 A | 1-16 |

☒   Further documents are listed in the continuation of Box C.          ☐   See patent family annex.

| | |
|---|---|
| *     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| 06 April, 2012 (06.04.12) | 17 April, 2012 (17.04.12) |

| Name and mailing address of the ISA/<br>    Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2012/052069

C (Continuation). DOCUMENTS CONSIDERED TO BE RELEVANT

| Category* | Citation of document, with indication, where appropriate, of the relevant passages | Relevant to claim No. |
|---|---|---|
| A | JP 2007-537858 A (Stichting Energieonderzoek Centrum Nederland),<br>27 December 2007 (27.12.2007),<br>entire text<br>& US 2008/0044334 A1 & EP 1755770 A<br>& WO 2005/110582 A1 & NL 1026207 C<br>& KR 10-2007-0041443 A & CN 1980726 A<br>& CA 2598341 A | 1-16 |
| A | JP 2007-76990 A (Tosoh Corp.),<br>29 March 2007 (29.03.2007),<br>entire text<br>(Family: none) | 1-16 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010084930 A
- WO 2009099937 A
- JP 2003183020 A
- JP 4037007 A
- JP 5021844 A
- JP 5051533 A
- US 4440871 A
- JP 2011050321 A